# EUROPÄISCHE PATENTANMELDUNG

(11) **EP 3 489 205 A1**
(43) Veröffentlichungstag der Anmeldung: **29.05.2019**
(21) Anmeldenummer: 17204039.6
(22) Anmeldetag: 28.11.2017
(51) Int. Cl.: C04B 26/06, C08F 220/20, C09K 8/00

(54) **ISOSORBIDDERIVATE ALS REAKTIVE ZUSÄTZE IN REAKTIVHARZEN UND CHEMISCHEN DÜBELN**

(71) Anmelder: HILTI Aktiengesellschaft, 9494 Schaan (LI)
(72) Erfinder: Bunzen, Jens, 86159 Augsburg (DE); Bürgel, Thomas, 86899 Landsberg (DE); Gnaß, Beate, 86368 Gersthofen (DE); Gaefke, Gerald, 86159 Augsburg (DE); Jaehnichen, Klaus, 01187 Dresden (DE); Voit, Brigitte, 01187 Dresden (DE)
(74) Vertreter: Hilti Aktiengesellschaft Corporate Intellectual Property

(57) **Zusammenfassung**

Die vorliegende Erfindung betrifft ein Reaktivharz mit einem Vinylesterharz auf Basis nachwachsender Rohstoffe, insbesondere mit einem Dianhydrohexitol-basierten Vinylesterharz als Basisharz, eine dieses Reaktivharz enthaltende Reaktivharzkomponente sowie deren Verwendung zur chemischen Befestigung.

## Beschreibung

Die vorliegende Erfindung betrifft ein Reaktivharz mit einem Vinylesterharz auf Basis nachwachsender Rohstoffe, insbesondere einem Dianhydrohexitol-basierten Vinylesterharz als Basisharz, eine dieses Reaktivharz enthaltende Reaktivharzkomponente sowie deren Verwendung zur chemischen Befestigung.

Die Verwendung von chemischen Befestigungsmitteln auf Basis radikalisch härtbarer Reaktivharze ist seit langem bekannt. Im Bereich der Befestigungstechnik hat sich die Verwendung von Reaktivharzen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente (die Reaktivharzkomponente) das Reaktivharz und die andere Komponente (die Härterkomponente) das Härtungsmittel enthält. Andere, übliche Bestandteile, wie beispielsweise Füllmittel, Beschleuniger, Stabilisatoren, Lösungsmittel und Reaktivverdünner, können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet.

Als Basisharze werden in konventionellen Reaktivharzen und Reaktivharzkomponenten üblicherweise Vinylesterharze und insbesondere Vinylesterurethanharze eingesetzt, die durch Reaktion von monomeren oder polymeren aromatischen Diisocyanaten und Hydroxy-substituierten Methacrylaten, wie Hydroxyalkylmethacrylat, erhältlich sind. Die EP 0 713 015 B1 beispielsweise beschreibt Dübelmassen mit ungesättigten Polyesterharzen, Vinylesterharzen einschließlich Vinylesterurethanharzen als Basisharze. Auch die DE 10 2011 017 626 B4 beschreibt Vinylesterurethanharze. Die Rohstoffe für die Basisharze in derartigen Systemen stammen aus der klassischen Erdölchemie, bei der die Rohstoffe aus fossilen Rohstoffquellen, wie Erdöl, erhalten werden.

Es ist allgemein bekannt, dass die fossilen Rohstoffquellen, wie Erdöl, nicht unerschöpflich sind und irgendwann versiegen werden. Für den Fall, dass die Verfügbarkeit der fossilen Rohstoffquellen abnimmt, besteht die Gefahr, dass die Verbindungen, die für die hohen Anforderungen, die an die chemischen Befestigungssysteme gestellt werden, unerlässlich sind, unter Umständen nicht mehr erhältlich sind.

Daher besteht zukünftig Bedarf an alternativen Systemen auf Basis nachwachsender Rohstoffe mit einem hohen Anteil an Kohlenstoff aus nachwachsenden Rohstoffen, um auch in Zukunft weiterhin hoch spezialisierte chemische Befestigungssysteme bereitstellen zu können.

Eine Aufgabe der Erfindung liegt demnach darin, ein Reaktivharz für die chemische Befestigungstechnik bereitzustellen, dessen Harzkomponente ein Basisharz und ggf. weitere Bestandteile, wie Reaktivverdünner, enthält, die einen sehr hohen Anteil an Kohlenstoff aus nachwachsenden Rohstoffen aufweisen.

Die DE 10 2014 103 923 A1 beschreibt beispielsweise Reaktivharzkomponenten, welchen zur Erhöhung des biogenen Anteils biogene Füllstoffe wie z.B. Mehle von Kernen oder Schalen bekannter Früchte (Walnüsse, Kirschen, Oliven), oder von Pflanzenfasern, Ligninen, Tanninen, Polysacchariden oder Zucker zugesetzt wurden. Die reaktiven Komponenten der beschriebenen Harzzusammensetzungen basieren jedoch auf fossilen Rohstoffen. Somit besteht auch ein Bedarf an Basisharzen und Reaktivverdünnern, welche aus biogenen Rohstoffen erhältlich sind.

Eine Klasse von biogenen Monomerbestandteilen für Polymere, die in jüngster Zeit großes wissenschaftliches und technisches Interesse geweckt hat, sind die Dianhydrohexitole, und insbesondere Isosorbid. Ausgangsmaterial für diese Verbindungen sind natürlich vorkommende Hexosen (für Isosorbid z.B. D-Glucose), welche zu den entsprechenden Alkoholen hydriert und anschließend über doppelte Dehydratisierung zweimal zyklisiert werden. Die Dianhydrohexitole besitzen dadurch zwei sekundäre Hydroxygruppen, welche sie zu einer vielseitig verwendbaren Plattformchemikalie aus nachwachsenden Rohstoffen machen.

Es sind bereits Polymere bekannt, in denen Dianhydrohexitole entweder direkt oder nach Funktionalisierung der Hydroxygruppen als Monomere eingesetzt werden. DE 10 2012 219 476 beschreibt ein oligomeres Dianhydrohexitol-basiertes Vinylesterurethanharz, welches in Reaktivharzkomponenten zur chemischen Befestigung eingesetzt werden kann.

Der vorliegenden Erfindung lag jedoch nicht nur der Gedanke zugrunde, Bestandteile von Mehrkomponenten-Reaktivharz-Systemen, die aus fossilen Quellen stammen, ganz oder teilweise durch Zucker zu ersetzen, die mit einer oder mehreren (Meth)acrylatgruppe(n) funktionalisiert wurden, um einen höheren Anteil an biogenen Harzen zu erzielen. Die Erfindung hatte vielmehr das Ziel, ein biogenes Reaktivharz zu finden, dessen Härtungsverhalten mit dem fossiler Reaktivharze vergleichbar ist. Außerdem sollte eine Reaktivharzkomponente aus dem biogenen Reaktivharz eine annehmbare Versagensverbundspannung aufweisen.

Diese Aufgabe wird gelöst, indem ein (Meth)acrylat auf Basis eines Dianhydrohexitolderivats, insbesondere eines Dianhydrohexitol-bis-glycidethers, verwendet wird. Dies hat den Vorteil, dass zur Synthese der Reaktivharz-Komponenten auf Ausgangsverbindungen zurückgegriffen werden kann, die in ausreichender Menge und Qualität aus nachwachsenden Rohstoffen erhalten werden können. Insbesondere funktionalisierte Dianhydrohexitol-Verbindungen, welche durch Umsetzung eines Dianhydrohexitol-bis-glycidethers mit (Meth)acrylsäure erhältlich sind, haben sich hierbei im Rahmen der vorliegenden Erfindung als vorteilhaft erwiesen. Wie die hier in den Beispielen beschriebenen Versuche zeigen, weisen solche Verbindungen ein gutes Härtungsprofil auf. Außerdem liegt die Versagensverbundspannung von Reaktivharzharzkomponenten, welche die funktionalisierten Dianhydrohexitol-Verbindungen enthalten, in einem akzeptablen Bereich.

Zum besseren Verständnis der vorliegenden Erfindung werden die folgenden Erläuterungen der hierin verwendeten Terminologie als sinnvoll erachtet. Im Sinne der Erfindung bedeuten:
- *"Zucker"* ein Saccharid, insbesondere ein Monosaccharid, bevorzugt eine Aldose oder Ketose. Für die vorliegende Erfindung werden, falls neben der erfindungsgemäß verwendeten Dianhydrohexitol-Verbindung noch weitere Zuckerverbindungen im Reaktivharz oder der Reaktivharzkomponente vorhanden sind, für die weiteren Zuckerverbindungen bevorzugt Pentosen oder Hexosen verwendet. Der Zucker in den weiteren Zuckerverbindungen kann - soweit nicht anders angegeben - in seiner offenkettigen Form oder, falls eine solche Form existiert, in seiner zyklischen Form verwendet werden. Bevorzugt wird für die vorliegende Erfindung als Zucker in der weiteren Zuckerverbindung eine Furanose oder Pyranose verwendet, also das zyklische Halbacetal oder Acetal einer Hexose. Des Weiteren ist als weitere Zuckerverbindung ein Zuckermethacrylat bevorzugt;
- *"Zuckerderivat"* ein Derivat eines Zuckers, insbesondere ein durch Reduktion oder Dehydratisierung aus einem Zucker hergeleitetes Derivat. Zu den Zuckerderivaten zählen auch die in den erfindungsgemäß verwendeten Dianhydrohexitol-Verbindungen vorhandenen Dianhydrohexitole, welche jedoch weiter unten beschrieben werden sollen;
- *"Basisharz"* ein üblicherweise festes oder hochviskoses radikalisch polymerisierbares Harz, welches durch Polymerisation (z.B. nach Zugabe eines Initiators in Gegenwart eines Beschleunigers) härtet;
- *"Reaktivharz-Masterbatch"* das Reaktionsprodukt der Reaktion zur Herstellung des Basisharzes, also typischerweise eine Mischung aus Basisharz, Stabilisator und weiteren Bestandteilen der Reaktionsmischung;
- *"Reaktivharz"* eine Mischung aus Reaktivharz-Masterbatch, einem Beschleuniger und einem Inhibitor (auch als Beschleuniger-Inhibitor-System bezeichnet), einem Reaktivverdünner und gegebenenfalls weiteren Additiven; das Reaktivharz ist typischerweise flüssig oder viskos und kann zu einer Reaktivharzkomponente weiterverarbeitet werden;
- *"Inhibitor"* oder *"Polymerisationsinhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"inhibitor"* bezeichnet - die jeweilige Bedeutung des Begriffes erschließt sich aus dem Kontext);
- *"Initiator"* einen Stoff, der (üblicherweise in Kombination mit einem Beschleuniger) reaktionsinitiierende Radikale bildet;
- *"Beschleuniger"* ein Reagenz, welches mit dem Initiator eine Reaktion eingeht, so dass bereits bei niedrigen Temperaturen durch den Initiator größere Mengen an Radikalen erzeugt werden, und/oder welches die Zerfallsreaktion des Initiators katalysiert;
- *"Reaktivverdünner"* flüssige oder niedrigviskose Monomere und Basisharze, welche andere Basisharze oder den Reaktivharz-Masterbatch verdünnen und dadurch die zu deren Applikation notwendige Viskosität verleihen, zur Reaktion mit dem Basisharz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- *"Reaktivharzkomponente"* eine flüssige oder viskose Mischung aus Reaktivharz und Füllstoffen und optional weiteren Komponenten, z.B. Additiven; typischerweise ist die Reaktivharzkomponente eine der beiden Komponenten eines Zweikomponenten-Reaktivharz-Systems zur chemischen Befestigung;
- *"Härterkomponente"* eine Zusammensetzung, die einen Initiator für die Polymerisation eines Basisharzes enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Basisharzes erst nach dem Mischen der beiden Komponenten erfolgt;
- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Basisharzes erst nach dem Mischen aller Komponenten erfolgt;
- *"(Meth)acryl...*/*...(meth)acryl..."*, dass sowohl die "Methacryl.../...methacryl..."- als auch die "Acryl.../...acryl..."-Verbindungen gemeint sein sollen; bevorzugt sind in der vorliegenden Erfindung "Methacryl.../...methacryl..."-Verbindungen gemeint;
- *"ein", "eine", "einer" als* Artikel vor einer chemischen Verbindungsklasse, z.B. vor dem Wort "Dianhydrohexitol-Verbindung", dass eine oder mehrere unter diese chemische Verbindungsklasse fallende Verbindungen, z.B. verschiedene Dianhydrohexitol-Verbindungen, gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;
- *"etwa"* oder *"circa"* oder *"ca."* vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert);
- ein durch Zahlen begrenzter Bereich, z.B. *"von 100°C bis 120°C",* dass die beiden Eckwerte und jeder Wert innerhalb dieses Bereichs einzeln offenbart sind.

Ein erster Gegenstand der Erfindung betrifft ein Reaktivharz, umfassend mindestens eine Dianhydrohexitol-Verbindung der Formel (I), 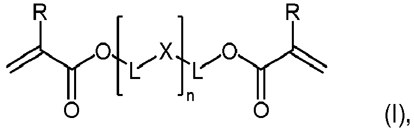 worin R für ein Wasserstoffatom oder eine Methylgruppe steht, X für ein Dianhydrohexitol steht, L unabhängig voneinander für eine verbrückende C₁-C₈-Alkylengruppe stehen, welche unsubstituiert oder Hydroxy-substituiert sein kann, und n 1 bis 5 sein kann.

Den Erfindern ist es gelungen, auf Basis einer Dianhydrohexitol-Verbindung der Formel (I) eine Komponente bereitzustellen, die als Basisharz oder als Reaktivverdünner einsetzbar ist, aus nachwachsenden Rohstoffen hergestellt werden kann und eine annehmbare Härtungszeit aufweist.

Das erfindungsgemäße Reaktivharz umfasst mindestens eine Dianhydrohexitol-Verbindung der Formel (I), wobei X für ein Dianhydrohexitol steht.

Dianhydrohexitole, genauer 1,4:3,6-Dianhydrohexitole, sind Nebenprodukte der Stärkeindustrie und werden somit aus nachwachsenden Rohstoffverbindungen erhalten. Sie sind beispielsweise durch Dehydrierung von D-Hexitolen erhältlich, die wiederum durch einfache Reduktion aus Hexosezuckern erhältlich sind. Die Dianhydrohexitole sind somit aus Biomasse erhältliche, chirale Produkte. Abhängig von der Konfiguration der zwei Hydroxygruppen wird zwischen drei Isomeren unterschieden, dem Isosorbid (Struktur A), dem Isomannid (Struktur B) und dem Isoidid (Struktur C), die durch Hydrogenierung und anschließende doppelte Dehydrierung aus der D-Glucose, D-Mannose bzw. der L-Fructose erhältlich sind.

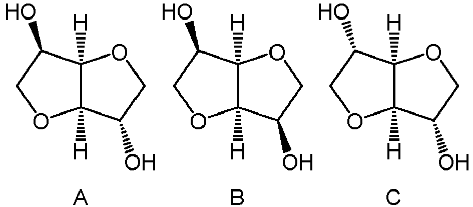

Bei den als Ausgangsverbindung für die Verbindung der Formel (I) verwendeten Dianhydrohexitolen kann es sich somit um ein Isosorbid, Isomannid oder Isoidid oder um ein Gemisch dieser Dianhydrohexitole handeln. Im Folgenden ist demnach unter dem Begriff Dianhydrohexitole die jeweilige diskrete Verbindung wie auch ein beliebiges Gemisch der verschiedenen Einzelverbindungen zu verstehen. Nachdem das Isosorbid am weitesten verbreitet ist, wird es bevorzugt als Ausgangsverbindung für die erfindungsgemäßen Dianhydrohexitol-Verbindungen verwendet.

Die hier beschriebenen Dianhydrohexitole enthalten typischerweise eines oder mehrere Stereozentren. Da die in der Erfindung verwendeten Dianhydrohexitole vorteilhafterweise biogene Dianhydrohexitole sind, haben sie typischerweise dieselbe Stereochemie wie ihre natürlichen Vorläufer, z.B. hat D-Isosorbid dieselbe Stereochemie wie sein natürlicher Vorläufer D-Glucose. Wenn im Folgenden keine Stereochemie angegeben wird, ist die Stereochemie typischerweise die natürliche Stereochemie. Die Verwendung von Zuckern, Zuckerderivaten oder Dianhydrohexitolen mit nichtnatürlicher Stereochemie ist jedoch ebenfalls möglich.

Die erfindungsgemäß verwendeten Dianhydrohexitol-Verbindungen enthalten bevorzugt ein Dianhydrohexitol ausgewählt aus der Gruppe bestehend aus Isosorbid, Isomannid und Isoidid oder einem Gemisch von zwei oder mehr dieser Verbindungen. Besonders bevorzugt enthalten die erfindungsgemäß verwendeten Dianhydrohexitol-Verbindungen Isosorbid oder eine Mischung aus Isosorbid und einem oder mehreren anderen Dianhydrohexitolen.

Erfindungsgemäß enthalten die Dianhydrohexitol-Verbindungen der Formel (I) mindestens eine (Meth)acrylestergruppe, die über eine verbrückende Alkylengruppe L, welche unsubstituiert oder Hydroxy-substituiert sein kann, an das Dianhydrohexitol X gebunden ist. Bevorzugt ist das Dianhydrohexitol X an mindestens einer, mehr bevorzugt an allen Hydroxygruppen mit der verbrückenden Alkylengruppe L verethert, welche mit mindestens einer (Meth)acrylestergruppe verestert ist.

Demnach handelt es sich bei den erfindungsgemäßen Dianhydrohexitol-Verbindungen ohne Angabe der Stereochemie an den chiralen Kohlenstoffatomen bevorzugt um eine Verbindung der Formel (la), 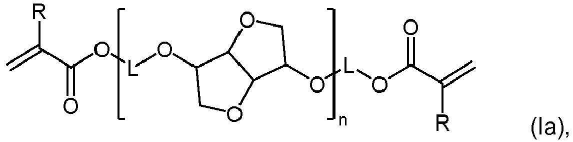 wobei R, L und n die oben genannten Bedeutungen haben.

Bevorzugt handelt es sich bei dem Dianhydrohexitol X um Isosorbid.

Demnach handelt es sich bei der erfindungsgemäßen Dianhydrohexitol-Verbindung bevorzugt um eine Verbindung der Formel (Ib), 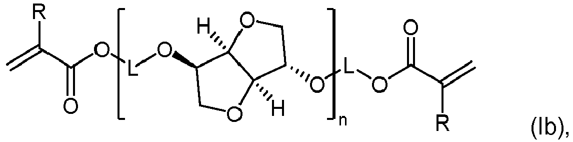 wobei R, L und n die oben genannten Bedeutungen haben.

Bei der verbrückenden Alkylengruppe L handelt es sich erfindungsgemäß um eine C₁-C₈-Alkylengruppe, welche unsubstituiert oder Hydroxy-substituiert sein kann.

Bevorzugt handelt es sich bei der verbrückenden Alkylengruppe L um eine C₂-C₆-Alkylengruppe, mehr bevorzugt um eine C₃-C₅-Alkylengruppe. Gemäß einer besonders bevorzugten Ausführungsform handelt es sich bei der verbrückenden Alkylengruppe L um eine C₃-Alkylengruppe.

Die verbrückende Alkylengruppe L kann unsubstituiert oder Hydroxy-substituiert sein. Bevorzugt ist die verbrückende Alkylengruppe Hydroxy-substituiert. Demnach ist die verbrückende Alkylengruppe L bevorzugt mit mindestens einer Hydroxygruppe substituiert.

Gemäß einer besonders bevorzugten Ausführungsform handelt es sich bei der verbrückenden Alkylengruppe L um eine C₃-Alkylengruppe, die mit mindestens einer Hydroxygruppe, besonders bevorzugt mit einer Hydroxygruppe substituiert ist.

Demnach hat die verbrückende Alkylengruppe L bevorzugt die folgende Struktur:

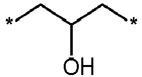

Die L-Gruppen können voneinander verschieden sein, sind jedoch bevorzugt gleich.

Des Weiteren handelt es sich bei dem Substituenten R bevorzugt um eine Methylgruppe.

Bevorzugt hat der Parameter n Werte im Bereich von 1 bis 3, mehr bevorzugt 1 bis 2. Besonders bevorzugt hat der Parameter n den Wert 1.

Die erfindungsgemäß verwendete Dianhydrohexitol-Verbindung hat somit ohne Angabe der Stereochemie an den chiralen Kohlenstoffatomen bevorzugt die folgende Struktur:

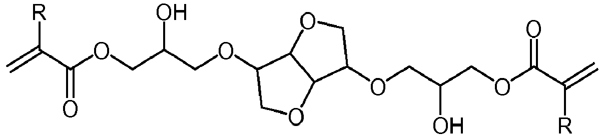

Ausgangsstoff für die erfindungsgemäßen Dianhydrohexitol-Verbindungen ist bevorzugt ein Dianhydrohexitol-bis-glycidether der folgenden Struktur:

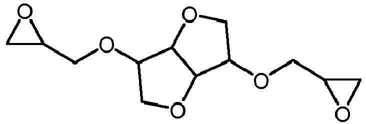

Die Synthese solcher Dianhydrohexitol-bis-glycidether ist dem Fachmann bekannt. In WO 2010/040464 ist beispielsweise die Synthese von Isosorbid-bis-glycidether durch Umsetzung von Isosorbid mit Epichlorhydrin beschrieben.

Erfindungsgemäß wird zur Synthese der Dianhydrohexitol-Verbindung ein Dianhydrohexitol-bis-glycidether in Gegenwart eines Katalysators mit (Meth)acrylsäure umgesetzt. Bevorzugt handelt es sich bei dem Katalysator um ein quartäres Ammoniumhalogenid, insbesondere bevorzugt ist Tetraethylammoniumbromid.

Herstellungsbedingt enthalten die erfindungsgemäßen Dianhydrohexitol-Verbindungen typischerweise auch Reste von nicht verestertem oder nur einfach veresterten Dianhydrohexitol-bis-glycidether. Gleicherweise können die erfindungsgemäßen Dianhydrohexitol-Verbindungen auch geringe Anteile von nicht oder nur einfach epoxidiertem Dianhydrohexitol enthalten, welches bei der Umsetzung mit (Meth)acrylsäure zu Dianhydrohexitoldi(meth)acrylat oder Dianhydrohexitol-(meth)acrylat umgesetzt wird. Demnach können die erfindungsgemäßen Dianhydrohexitol-Verbindungen Verunreinigungen der folgenden Strukturen enthalten:

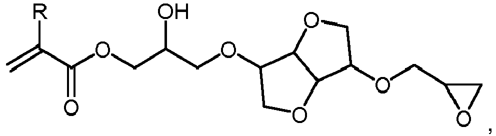

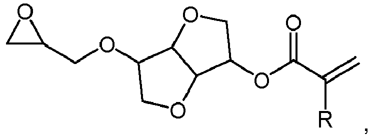

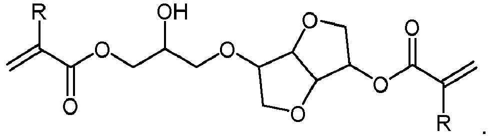

Trotz dieser Verunreinigungen werden diese Produkte im Rahmen der vorliegenden Erfindung als Dianhydrohexitol-Verbindungen bezeichnet, es sei denn es geht aus dem Kontext hervor, dass ein einzelnes Molekül dieser Verbindungen gemeint ist.

Werden alle Ausgangsverbindungen aus nachwachsenden Rohstoffen, wie Biomasse, erhalten, können bis zu 80 % des Kohlenstoffgehalts des Reaktivharzes aus nachwachsenden Rohstoffen stammen.

Zusätzlich oder alternativ hierzu enthält das erfindungsgemäße Reaktivharz bevorzugt bis zu 70 Gew.-%, mehr bevorzugt bis zu 60 Gew.-%, noch mehr bevorzugt bis zu 30 Gew.-%, noch mehr bevorzugt bis zu 12 Gew.-%, besonders bevorzugt bis zu 10 Gew.-% der mindestens einen Dianhydrohexitol-Verbindung der Formel (I), bezogen auf das Gesamtgewicht des Reaktivharzes.

Bevorzugt enthält das erfindungsgemäße Reaktivharz neben der mindestens einen Dianhydrohexitol-Verbindung der Formel (I) mindestens eine co-polymerisierbaren monomere Verbindung, die mindestens zwei (Meth)acrylat-Gruppen trägt.

Geeignete co-polymerisierbare monomere Verbindungen sind beispielsweise Vinylesterharze, die nur in Endstellung ungesättigte Gruppen aufweisen. Diese werden zum Beispiel durch Umsetzung von Epoxid-Monomeren, -Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Monomers, - Oligomers oder -Polymers mit Methacrylsäure oder Methacrylamid, bevorzugt mit Methacrylsäure, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglycolmono-(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen-(meth)acrylat, Polyoxypropylen(meth)acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethoxylierungs-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Gemäß einer bevorzugten Ausführungsform der vorliegenden Erfindung handelt es sich bei dem Vinylesterharz um ein Reaktionsprodukt aus Diisocyanatodiphenylmethan (MDI), Hydroxypropyl(meth)acrylat, und Dipropylenglycol. Die Herstellung des Vinylesterharzes ist in EP 0 713 015 A1 beschrieben, die hiermit als Referenz eingeführt und auf deren gesamte Offenbarung verwiesen wird.

Bevorzugt enthält das erfindungsgemäße Reaktivharz bis zu 99.0 Gew.-%, mehr bevorzugt 70.0 bis 95.0 Gew.-%, noch mehr bevorzugt 80.0 bis 94.0 Gew.-%, besonders bevorzugt 85.0 bis 90.0 Gew.-% der co-polymerisierbaren monomeren Verbindung, bezogen auf das Gesamtgewicht des Reaktivharzes.

Demnach enthält das erfindungsgemäße Reaktivharz bevorzugt bis zu 70 Gew.-%, mehr bevorzugt bis zu 60 Gew.-%, noch mehr bevorzugt bis zu 30 Gew.-%, noch mehr bevorzugt bis zu 12 Gew.-%, besonders bevorzugt bis zu 10 Gew.-% der mindestens einen Dianhydrohexitol-Verbindung der Formel (I) und bis zu 99.0 Gew.-%, mehr bevorzugt 70.0 bis 95.0 Gew.-%, noch mehr bevorzugt 80.0 bis 94.0 Gew.-%, besonders bevorzugt 85.0 bis 90.0 Gew.-% der co-polymerisierbaren monomeren Verbindung, bezogen auf das Gesamtgewicht des Reaktivharzes.

Reaktivharze werden in der Regel hergestellt, indem die zur Herstellung des Basisharzes erforderlichen Ausgangsverbindungen gegebenenfalls zusammen mit Katalysatoren und Lösungsmitteln, insbesondere Reaktivverdünner, in einen Reaktor gegeben und miteinander zur Reaktion gebracht werden. Nach Beendigung der Reaktion und gegebenenfalls bereits zu Beginn der Reaktion werden zu dem Reaktionsgemisch Polymerisationsinhibitoren für die Lagerstabilität gegeben, wodurch der sogenannte Harz-Masterbatch erhalten wird. Zu dem Harz-Masterbatch werden häufig Beschleuniger für die Härtung des Basisharzes, gegebenenfalls weitere Polymerisationsinhibitoren, die gleich oder ungleich dem Polymerisationsinhibitor für die Lagerstabilität sein können, zur Einstellung der Gelzeit, und gegebenenfalls weiteres Lösungsmittel, insbesondere Reaktivverdünner, gegeben, wodurch das Reaktivharz erhalten wird. Dieses Reaktivharz wird zur Einstellung verschiedener Eigenschaften, wie der Rheologie und der Konzentration des Basisharzes, mit anorganischen und/oder organischen Zuschlagstoffen versetzt, wodurch eine Reaktivharzkomponente erhalten wird.

Ein bevorzugtes Reaktivharz enthält dementsprechend mindestens ein Basisharz, mindestens einen Reaktivverdünner und mindestens einen Polymerisationsinhibitor. Eine Reaktivharzkomponente enthält neben dem eben beschriebenen Reaktivharz anorganische und/oder organische Zuschlagstoffe, wobei anorganische Zuschlagstoffe besonders bevorzugt sind, wie sie nachfolgend näher beschrieben werden.

In einer bevorzugten Ausführungsform der Erfindung enthält das Reaktivharz weitere niederviskose, radikalisch polymerisierbare Verbindungen, bevorzugt solche, die aus nachwachsenden Rohstoffen erhältlich sind, als Reaktivverdünner, um etwa die Viskosität der Vinylesterurethanharze bzw. der Vorstufen bei deren Herstellung anzupassen, falls erforderlich. In diesem Zusammenhang wird auf die WO 09/156648 A1, die WO 10/061097 A1, die WO 10/079293 A1 und die WO 10/099201 A1, verwiesen, deren Inhalte hiermit in diese Anmeldung aufgenommen werden.

Alternativ kann das Reaktivharz jeden geeigneten Reaktivverdünner enthalten. Zweckmäßig enthält das Reaktivharz als Reaktivverdünner einen aliphatischen oder aromatischen C₅-C₁₅-(Meth)acrylsäureester, wobei besonders bevorzugt (Meth)acrylsäureester ausgewählt werden aus der Gruppe bestehend aus Hydroxypropyl(meth)acrylat, 1,2-Ethandioldi(meth)acrylat, 1,3-Propandioldi-(meth)acrylat, 1,2-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N,N*-Dimethylaminoethyl(meth)acrylat, *N,N*-Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykol-mono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.²⁶-decan, Dicyclopentenyloxyethylcrotonat, 3-(Meth)acryloyl-oxymethyl-tricylo-5.2.1.0.²⁶-decan, 3-(Meth)cyclopentadienyl(meth)acrylat, Isobornyl(meth)acrylat und Decalyl-2-(meth)acrylat; PEG-Di(meth)acrylat, wie PEG200Di(meth)acrylat, Tetraehtylenglykoldi(meth)acrylat, Solketal(meth)acrylat, Cyclohexyl(meth)acrylat, Phenoxyethyldi(meth)acrylat, Methoxyethyl(meth)acrylat, Tetrahydrofurfuryl-(meth)acrylat, *tert*-Butyl(meth)acrylat und Norbornyl(meth)acrylat. Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie *tert*-Butylstyrol, Divinylbenzol und Allylverbindungen, wobei die Vertreter davon bevorzugt sind, die aus Grundchemikalien auf Basis nachwachsender Rohstoffe erhältlich sind.

Bevorzugt enthält das erfindungsgemäße Reaktivharz 5.0 bis 50.0 Gew.-%, mehr bevorzugt 10.0 bis 30.0 Gew.-%, noch mehr bevorzugt 15.0 bis 25.0 Gew.-%, besonders bevorzugt 18.0 bis 20.0 Gew.-% des Reaktivverdünners, bezogen auf das Gesamtgewicht des Reaktivharzes.

Demnach enthält das erfindungsgemäße Reaktivharz bevorzugt bis zu 70 Gew.-%, mehr bevorzugt bis zu 60 Gew.-%, noch mehr bevorzugt bis zu 30 Gew.-%, noch mehr bevorzugt bis zu 12 Gew.-%, besonders bevorzugt bis zu 10 Gew.-% der mindestens einen Dianhydrohexitol-Verbindung der Formel (I) und bis zu 99.0 Gew.-%, mehr bevorzugt 70.0 bis 95.0 Gew.-%, noch mehr bevorzugt 80.0 bis 94.0 Gew.-%, besonders bevorzugt 85.0 bis 90.0 Gew.-% der co-polymerisierbaren monomeren Verbindung und 5.0 bis 50.0 Gew.-%, mehr bevorzugt 10.0 bis 30.0 Gew.-%, noch mehr bevorzugt 15.0 bis 25.0 Gew.-%, besonders bevorzugt 18.0 bis 20.0 Gew.-% des Reaktivverdünners, bezogen auf das Gesamtgewicht des Reaktivharzes.

Zur Stabilisierung gegen vorzeitige Polymerisation (Lagerstabilität) und zur Einstellung der Gelzeit und der Reaktivität kann das Reaktivharz einen Polymerisationsinhibitor enthalten. Zur Sicherstellung der Lagerstabilität ist der Polymerisationsinhibitor bevorzugt in einer Menge von 0,0005 bis 2 Gew.-%, stärker bevorzugt 0,01 bis 1 Gew.-%, bezogen auf das Gesamtgewicht des Reaktivharzes, enthalten. Zur Einstellung der Gelzeit und der Reaktivität kann das Reaktivharz zusätzlich 0,005 bis 3 Gew.-%, vorzugsweise 0,05 bis 1 Gew.-% eines Polymerisationsinhibitors enthalten.

Als Polymerisationsinhibitoren sind erfindungsgemäß die für radikalisch polymerisierbare Verbindungen üblicherweise verwendeten Polymerisationsinhibitoren geeignet, wie sie dem Fachmann bekannt sind.

Zur Stabilisierung gegen vorzeitige Polymerisation enthalten Reaktivharz und Reaktivharzkomponenten üblicherweise Polymerisationsinhibitoren, wie Hydrochinon, substituierte Hydrochinone, z.B. 4-Methoxyphenol, Phenothiazin, Benzochinon odertert-Butylbrenzkatechin, wie beispielsweise in der EP 1935860 A1 oder EP 0965619 A1 beschrieben werden, stabile Nitroxylradikale, auch N-Oxyl-Radikale genannt, wie Piperidinyl-N-Oxyl oder Tetrahydropyrrol-N-Oxyl, wie beispielsweise in der DE 19531649 A1 beschrieben. Besonders bevorzugt wird 4-Hydroxy-2,2,6,6-tetramethylpiperidin-N-oxyl (auch als TEMPOL bezeichnet) zur Stabilisierung verwendet, was den Vorteil hat, dass damit auch die Gelzeit eingestellt werden kann.

Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Polymerisationsinhibitoren, die oft Bestandteil von kommerziellen radikalisch härtenden Reaktivharzen sind, kommen Phenole, wie 2-Methoxyphenol, 4-Methoxyphenol, 2,6-Di-*tert*-butyl-4-methylphenol, 2,4-Di-*tert*-butylphenol, 2,6-Di-*tert-*butylphenol, 2,4,6-Trimethylphenol, 2,4,6-Tris(dimethylaminomethyl)phenol, 4,4'-Thio-bis(3-methyl-6-*tert*-butylphenol), 4,4'-Isopropylidendiphenol, 6,6'-Di-*tert*-butyl-4,4'-bis(2,6-di-*tert*-butylphenol), 1,3,5-Trimethyl-2,4,6-tris(3,5-di-*tert*-butyl-4-hydroxybenzyl)-benzol, 2,2'-Methylen-di-*p*-cresol, Brenzkatechin und Butylbrenzkatechine, wie 4-*tert-*Butylbrenzkatechin, 4,6-Di-*tert*-butylbrenzkatechin, Hydrochinone, wie Hydrochinon, 2-Methylhydrochinon, 2-*tert*-Butylhydrochinon, 2,5-Di-*tert*-butylhydrochinon, 2,6-Di-*tert-*butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und *N*-Oxyl-Radikale in Betracht.

Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE 199 56 509 beschrieben sind. Ferner sind geeignete *N*-Oxylverbindungen Oxime, wie Acetaldoxim, Acetonoxim, Methylethylketoxim, Salicyloxim, Benzoxim, Glyoxime, Dimethylglyoxim, Aceton-*O*-(benzyloxycarbonyl)oxim und dergleichen. Ferner können in para-Position zur Hydroxylgruppe substituierte Pyrimidinol- oder Pyridinol-Verbindungen, wie sie in der Patentschrift DE 10 2011 077 248 B1 beschrieben sind als Stabilisatoren verwendet werden.

Die Polymerisationsinhibitoren können, abhängig von den gewünschten Eigenschaften und der Verwendung des Reaktivharzes, entweder alleine oder als Kombination von zweien oder mehreren davon verwendet werden. Die Kombination der phenolischen und der nicht-phenolischen Inhibitoren ermöglicht dabei einen synergistischen Effekt, wie eine im Wesentlichen driftfreien Einstellung der Gelzeit des Reaktivharzes.

Bevorzugt enthält das erfindungsgemäße Reaktivharz, mehr bevorzugt besteht aus, bis zu 70 Gew.-%, mehr bevorzugt bis zu 60 Gew.-%, noch mehr bevorzugt bis zu 30 Gew.-%, noch mehr bevorzugt bis zu 12 Gew.-%, besonders bevorzugt bis zu 10 Gew.-% der mindestens einen Dianhydrohexitol-Verbindung der Formel (I) und bis zu 99.0 Gew.-%, mehr bevorzugt 70.0 bis 95.0 Gew.-%, noch mehr bevorzugt 80.0 bis 94.0 Gew.-%, besonders bevorzugt 85.0 bis 90.0 Gew.-% der co-polymerisierbaren monomeren Verbindung und 5.0 bis 50.0 Gew.-%, mehr bevorzugt 10.0 bis 30.0 Gew.-%, noch mehr bevorzugt 15.0 bis 25.0 Gew.-%, besonders bevorzugt 18.0 bis 20.0 Gew.-% des Reaktivverdünners und 0,0005 bis 2 Gew.-%, mehr bevorzugt 0,01 bis 1 Gew.-% des Polymerisationsinhibitors, bezogen auf das Gesamtgewicht des Reaktivharzes.

Bevorzugt wird die Härtung des Harzbestandteils mit einem Radikalinitiator, wie einem Peroxid initiiert. Neben dem Radikalinitiator kann zusätzlich ein Beschleuniger verwendet werden. Hierdurch werden schnellhärtende Reaktivharzkomponenten erhalten, die kalthärtend sind, d.h. die bei Raumtemperatur härten. Geeignete Beschleuniger, die gewöhnlich dem Reaktivharz zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)-ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diaminodimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)-arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxylalkyl)anilin mit Dicarbonsäuren oder durch Polyaddition von Ethylenoxid an diese Amine erhalten werden, sind ebenso als Beschleuniger geeignet.

Geeignete Metallsalze sind zum Beispiel Cobaltoctoat oder Cobaltnaphthenoat sowie Vanadium-, Kalium-, Kalzium-, Kupfer-, Mangan- oder Zirkoniumcarboxylat.

Sofern ein Beschleuniger verwendet wird, wird er in einer Menge von 0,01 bis 10 Gew.-%, bevorzugt 0,2 bis 5 Gew.-%, bezogen auf das Gesamtgewicht des Reaktivharzes, eingesetzt.

Ein weiterer Gegenstand der vorliegenden Erfindung ist die Verwendung des oben beschriebenen Reaktivharzes zur chemischen Befestigung eines Verankerungsmittels in einem Bohrloch.

Bevorzugt ist das Verankerungsmittel aus Stahl oder aus Eisen.

Gemäß einer besonders bevorzugten Ausführungsform der vorliegenden Erfindung ist das Bohrloch ein Bohrloch in mineralischem oder metallischem Untergrund, bevorzugt einem Untergrund ausgewählt aus der Gruppe bestehend aus Beton, Porenbeton, Ziegelwerk, Kalksandstein, Sandstein, Naturstein, Glas und Stahl.

Ein weiterer Gegenstand der Erfindung ist eine Reaktivharzkomponente, die neben dem eben beschriebenen Reaktivharz anorganische und/oder organische Zuschlagstoffe enthält, wie Füllstoffe und/oder weitere Additive.

Der Anteil des Reaktivharzes in der Reaktivharzkomponente beträgt bevorzugt 10 bis 60 Gew.-%, stärker bevorzugt 20 bis 35 Gew.-%, bezogen auf das Gesamtgewicht der Reaktivharzkomponente. Dementsprechend beträgt der Anteil der Zuschlagstoffe bevorzugt 90 bis 40 Gew.-%, stärker bevorzugt 80 bis 65 Gew.-%, bezogen auf das Gesamtgewicht der Reaktivharzkomponente.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerde- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich die globulären, inerten Stoffe (Kugelform) aus. Füllstoffe liegen in der jeweiligen Komponente vorzugsweise in einer Menge von bis zu 90, insbesondere 3 bis 85, vor allem 5 bis 70 Gew.-% vorhanden.

Weitere denkbare Additive sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktivharzkomponente, Härterkomponente), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

In einer bevorzugten Ausführungsform der Erfindung ist die erfindungsgemäße Reaktivharzkomponente als Zwei- oder Mehrkomponenten-System, insbesondere Zweikomponenten-System konfektioniert, wobei die Reaktivharzkomponente und die Härterkomponente reaktionsinhibierend getrennt angeordnet sind.

Demnach ist ein weiterer Gegenstand der vorliegenden Erfindung ein Zweikomponenten-System, welches die oben beschriebene Reaktivharzkomponente und eine Härterkomponente umfasst.

Eine erste Komponente des erfindungsgemäßen Zweikomponenten-Systems, die Komponente A, enthält die Reaktivharzkomponente und eine zweite Komponente, die Komponente B enthält das Härtungsmittel. Hierdurch wird erreicht, dass die härtbaren Verbindungen und die Härterkomponente erst unmittelbar vor der Anwendung miteinander gemischt werden und die Härtungsreaktion auslösen.

Die Härterkomponente enthält das Härtungsmittel zur Initiierung der Polymerisation (Härtung) des Harzbestandteils. Dieses ist, wie bereits erwähnt, ein Radikalinitiator, bevorzugt ein Peroxid.

Alle dem Fachmann bekannten Peroxide, die zum Härten von Vinylesterharzen verwendet werden, können erfindungsgemäß zur Härtung der Dianhydrohexitol-basierten Vinylesterurethanharze eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214-A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie *tert*-Butylperester, Benzoylperoxid, Peracetate und Perbenzoate, Laurylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. PeroxidVerbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) verwendet.

Bevorzugt enthält die Härterkomponente des Zweikomponenten-Systems ferner anorganische Zuschlagstoffe, wobei die Zuschlagstoffe dieselben sind, wie sie der Reaktivharzkomponente zugegeben werden können.

Bei einer besonders bevorzugten Ausführungsform des Zweikomponenten-Systems enthält die Komponente A neben der Reaktivharzkomponente zusätzlich noch eine hydraulisch abbindende oder polykondensierbare anorganische Verbindung und die Komponente B neben dem Härtungsmittel noch Wasser. Derartige Mörtelmassen sind ausführlich in der DE 42 31 161 A1 beschrieben. Dabei enthält die Komponente A vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden. Als polykondensierbare anorganische Verbindung können auch silikatische, polykondensierbare Verbindungen, insbesondere lösliches, gelöstes und/oder amorphes Siliziumdioxid enthaltende Stoffe verwendet werden.

Das Zweikomponenten-System umfasst bevorzugt die Komponente A und die Komponente B reaktionsinhibierend getrennt in unterschiedlichen Behältern, beispielsweise einer Mehrkammer-Vorrichtung, wie eine Mehrkammer-Patrone und/oder-Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, das Zweikomponenten-System als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Das erfindungsgemäße Reaktivharz, die Reaktivharzkomponente sowie das Zweikomponenten-System finden vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Ein weiterer Gegenstand der vorliegenden Erfindung ist die Verwendung der oben beschriebenen Reaktivharzkomponente zur chemischen Befestigung eines Verankerungsmittels in einem Bohrloch.

Bevorzugt ist das Verankerungsmittel aus Stahl oder aus Eisen.

Gemäß einer besonders bevorzugten Ausführungsform der vorliegenden Erfindung ist das Bohrloch ein Bohrloch in mineralischem oder metallischem Untergrund, bevorzugt einem Untergrund ausgewählt aus der Gruppe bestehend aus Beton, Porenbeton, Ziegelwerk, Kalksandstein, Sandstein, Naturstein, Glas und Stahl.

Die folgenden Beispiele dienen der weiteren Erläuterung der Erfindung.

### AUSFÜHRUNGSBEISPIELE

### A) Herstellung der Dianhydrohexitol-Verbindungen

### A1) Synthese von Isosorbid-bis-glycidetherdimethacrylat

221,7 g Isosorbid-bis-glycidether (1,42 mol, DENACOL GSR-101, Nagase ChemteX Corp.) wurden in einem auf 50 °C vorgeheizten Reaktor (RC-1, Mettler Toledo) vorgelegt. Dazu wurden 129,1 g Methacrylsäure (1,5 mol, Aldrich, 99%), 102 mg (0,595 mmol) 4-Hydroxy-2,2,6,6-tetramethylpiperidinyloxyl (Tempol, zerkleinert) und 102 mg (0,514 mmol) Phenylthiazin (zerkleinert, SIGMA-Aldrich, purum, ≥ 98%) gegeben. Anschließend wurde für 15 min gerührt. Danach wurden unter Rühren 3,734 g (17,77 mmol) Tetraethylammoniumbromid (TEABr) (Merck, 97%) vorsichtig in kleinen Portionen zugegeben. Der Reaktor wurde verschlossen, mit einem Blasenzähler verbunden und unter Rühren (500 U/min) auf 100 °C Massetemperatur erhitzt. Die Masse wurde maximal für 6 h bei 100 °C gerührt. Die Reaktion der Epoxidgruppen wurde mittels NMR verfolgt. Spätestens nach 6 h wurde die Umsetzung beendet und die Masse so schnell wie möglich auf ca. 50 °C abgekühlt und entnommen. Bei Bedarf können die Reaktionsprodukte unter Zugabe einer Mischung aus (2-Hydroxypropyl)methacrylat (HPMA) (70 g) und Tempol (70 mg) aus dem Reaktor entfernt werden. Die Masse ist einsatzbereit für die Abmischung zu Reaktivharzen.

In drei Wiederholungsversuchen wurden bei Reaktionszeiten zwischen 5 und maximal 6 h vergleichbare Produkte mit einem Restgehalt von ca. 9 - 13 mol% Methacrylsäure erhalten. Mittels NMR waren keine Epoxidgruppen mehr detektierbar.

### B) Untersuchung des Härtungsverhaltens

Die in Beispiel A1 hergestellten Dianhydrohexitol-Verbindungen wurden Reaktivharzen zugesetzt und anschließend deren Härtungsverhalten untersucht. Als Standardharz wurde hierbei eine Mischung aus Reaktivharz-Masterbatch C1, Hydroxypropylmethacrylat (HPMA), dem kommerziellen Reaktivverdünner 1,4-Butandioldimethacrylat (1,4-BDDMA), einem aromatischen Amin (als Beschleuniger für die Peroxidzersetzung) und verschiedenen Stabilisatoren verwendet. Diesem Reaktivharz wurden unterschiedliche Mengen der hergestellten Dianhydrohexitol-Verbindungen zugegeben. Zur Härtung wurde die so erhaltene Reaktivharzkomponente mit Benzoylperoxid in einem entsprechenden Verhältnis abgemischt (siehe Tabelle 1).

**Tabelle 1: Zusammensetzung der jeweiligen Proben**

| Probe | Zusammensetzung (Austausch in mol-% wenn nicht anders angegeben) | Masterbatch C1 [g] | BDDMA [g] | A1 [g] | DiPT [g] | TEMPOL [g] | tBBK [g] |
|---|---|---|---|---|---|---|---|
| Referenz | 0 % A1 | 42,68 | 25,6 | 0 | 1,472 | 0,021 | 0,226 |
| Probe 1 | 20 % A1 | 42,68 | 20,48 | 9,53 | 1,4722 | 0,0213 | 0,226 |
| Probe 2 | 40 % A1 | 42,68 | 15,36 | 19,06 | 1,472 | 0,021 | 0,2264 |
| Probe 3 | A1 ersetzt 20 Gew.-% des Masterbatch C1 | 34,15 | 25,6 | 8,54 | 1,4727 | 0,0215 | 0,2264 |
| Probe 4 | 60 % A1 | 42,68 | 10,24 | 28,59 | 1,472 | 0,021 | 0,226 |

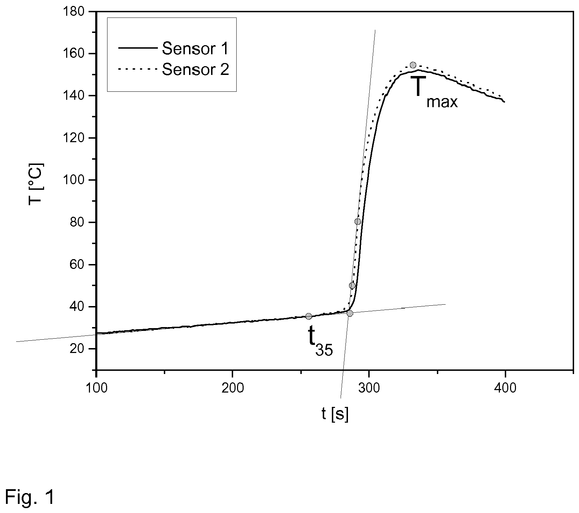

Anschließend wurde die Temperatur-Zeit-Kurve der Härtung wie folgt aufgenommen:
In einem Kunststoffbecher wurden ca. 20 g des zu untersuchenden Reaktivharzes und die entsprechende Menge an Härter (Perkadox 20S, Masseverhältnis 70:30) abgewogen. Da das System empfindlich auf Umgebungstemperatur reagiert, müssen die Komponenten auf 25 °C temperiert werden. Die Temperierung erfolgte in einem Thermostaten (B12/C11 Prüfgerätewerk Medingen GmbH). Die Messung wurde unmittelbar vor dem Mischen der Reaktionskomponenten gestartet. Der Härter wurde der vorgelegten Harzkomponente zugegeben und mittels Holzspatel für 40 s gut verrührt. Die Mischung wurde in zwei Reagenzgläser ca. 6 cm hoch eingefüllt, diese separat jeweils in einen im Thermostaten befindlichen Messzylinder eingehängt. Anschließend wurde jeweils ein mit Silikonpaste eingestrichener Temperatursensor (K-Typ, 150 mm lang Ø 1,5 mm) mittig 2 cm tief in die Mischung eingetaucht. Da die Umgebungstemperatur bis zum Zeitpunkt des Eintauchens der Sensoren registriert wurde, ist der Kurvenverlauf am Anfang der Messung nicht relevant, weshalb die Temperatur-Zeit-Kurven erst ab 100 Sekunden für die Auswertung verwendet wurden. Der Temperaturverlauf wurde mittels der Sensoren, die an einem Voltkraft Datalogger K202 (verbunden mit PC) angeschlossen sind, registriert. Als Ergebnisse wurden in dem Kurvenverlauf die Höchsttemperatur der Kurve (Tₘₐₓ), sowie die Zeit bei 35 °C abgelesen (schematische Auswertung gezeigt in Figur 1). Es wurden jeweils 3 Doppelbestimmungen pro System vorgenommen.

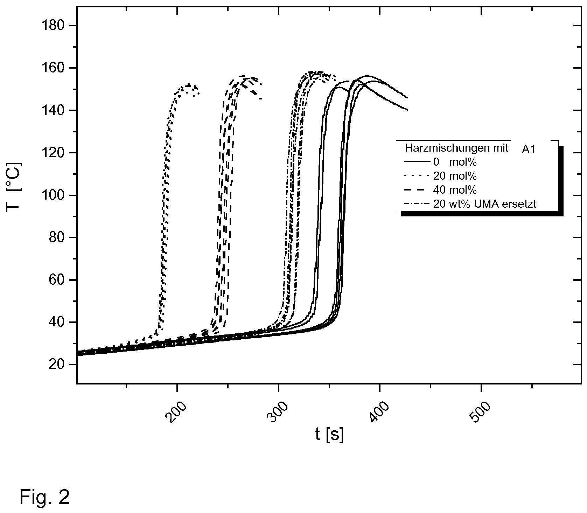

Die Ergebnisse sind in Tabelle 2 zusammengefasst, die Temperatur-Zeit-Kurven werden in Figur 2 gezeigt.

**Tabelle 2: Ergebnisse der Härtungsversuche**

| Probe | mol-% 1,4-BDDMA ersetzt (Austausch in mol-% wenn nicht anders angegeben) | Tₘₐₓ [°C] | σ [°C] | tₘₐₓ [min] | σ [min] |
|---|---|---|---|---|---|
| Referenz | 0 | 153 | 2 | 06:17 | 00:12 |
| Probe 1 | 20 % | 154 | 2 | 04:25 | 00:05 |
| Probe 2 | 40 % | 151 | 1 | 03:29 | 00:02 |
| Probe 3 | 20 Gew.-% UMA | 157 | 1 | 05:38 | 00:05 |
| Probe 4 | 60 % | 144 | 8 | 02:25 | 00:05 |

Als Ergebnisse dieser Messungen wurden die maximal erreichte Temperatur der Masse Tₘₐₓ und die Zeit bis zum Erreichen dieser Temperatur tₘₐₓ ausgewertet. Eine der Referenz vergleichbare Tₘₐₓ (ein Maß für die während der Härtung freiwerdende Polymerisationswärme) weist auf den gewünschten Einbau der zugesetzten Reaktionsprodukte in das sich bildende Netzwerk hin. Die in Tabelle 2 genannten Prozentangaben für den Zusatz der neuen Monomere in mol- % sind bezogen auf den Anteil 1,4-BDDMA in der Mischung. Bei diesen Berechnungen wird die Zahl der Doppelbindungen im neuen Reaktivverdünner berücksichtigt, so dass immer eine annähernd konstante Menge an reaktiven Doppelbindungen in der Mischung vorliegt.

Die Ergebnisse zeigen, dass die Maximaltemperaturen bei allen Versuchen bis zu 40 mol% Ersatz des 1,4-BDDMA etwa gleich bleiben. Erst bei Ersatz von 60 mol% 1,4-BDDMA nimmt Tₘₐₓ auf 144°C ab. Das belegt den guten Einbau der Isosorbidderivate in das sich bildende Netzwerk. Dagegen verkürzen sich die Zeiten bis zur Einstellung der Tₘₐₓ mit zunehmender Menge der Isosorbidderivate. Die Ergebnisse zeigen, dass 1,4-BDDMA durch die neuen, teilweise biobasierten reaktiven Zusätze ersetzt werden können, ohne dass sich dies negativ auf die Härtungsreaktion auswirkt. Darüber hinaus können anstelle des 1,4-BDDMA auch Teile des Basisharzes UMA durch die Isosorbidderivate ersetzt werden, ohne dass die Härtungsreaktion negativ beeinflusst wird.

### C) Herstellung von Reaktivharz-Systemen

### Reaktivharz-Masterbatch C1

Ein Reaktivharz-Masterbatch mit 65 Gew.-% der Vergleichsverbindung 1 als Basisharz und 35 Gew.-% Hydroxypropylmethacrylat (Visiomer® HPMA; Evonik Degussa GmbH), jeweils bezogen auf das Gesamtgewicht des Reaktivharz-Masterbatches, wurde gemäß dem Verfahren in EP 0 713 015 A1, die hiermit als Referenz eingeführt und auf deren gesamte Offenbarung verwiesen wird, synthetisiert. Das Produkt hat die folgende Struktur, wobei eine Oligomerenverteilung mit n = 0 bis 3 vorliegt:

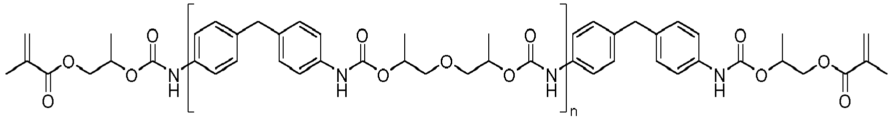

### Reaktivharz-Masterbatch C2:

531,1 g (26,57 Gew.-%) Masterbatch C1 wurde mit 400 g (20 Gew.-%) 1,4-Butandioldimethacrylat (Visiomer 1,4-BDDMA, Evonik Degussa GmbH), 400 g (20 Gew.-%) Hydroxypropylmethacrylat (GEO Specialty Chemicals), 46 g (2,3 Gew.-%) Di-isopropanol-p-toluidin (DiPT; BASF SE), 4,6 g (0,23 Gew.-%) Catechol (Catechol Flakes, RHODIA) und 1 g (0,05 Gew.-%) tert-Butylbrenzkatechin (tBBK, CFS EUROPE S.p.A. (Borregaard Italia S.p.A.)) gemischt und bis zur vollständigen Homogenisierung gerührt.

### Reaktivharz-Masterbatch C3 (Referenzreaktivharz)

345,7 g (69,15 Gew.-%) Masterbatch C2 wurde mit 154,1 g (30,77 Gew.-%) Masterbatch C1, 0,3 g (0,06 Gew.-%) Catechol (Catechol Flakes, RHODIA) und 0,3 g (0,06 Gew.-%) tert-Butylbrenzkatechin (tBBK, CFS EUROPE S.p.A. (Borregaard Italia S.p.A.)) gemischt und bis zur vollständigen Homogenisierung gerührt.

### Reaktivharz-Masterbatch C4

345,7 g (69,15 Gew.-%) Masterbatch C2 wurde mit 76,95 g (15,39 Gew.-%) Masterbatch C1, 50 g (10 Gew.-%, dies entspricht einem Austausch von 10 Gew.-% im Reaktivharz gegen Vergleichsverbindung 1) Isosorbiddiglycidyldimethacrylat, 27 g (5,38 Gew.-%) Hydroxypropylmethacrylat (GEO Specialty Chemicals), 0,3 g (0,06 Gew.-%) Catechol (Catechol Flakes, RHODIA) und 0,3 g (0,06 Gew.-%) tert-Butylbrenzkatechin (tBBK, CFS EUROPE S.p.A. (Borregaard Italia S.p.A.)) gemischt und bis zur vollständigen Homogenisierung gerührt.

### Aus den Reaktivharzen C3 und C4 wurden die Reaktivharzkomponenten C5 und C6 folgendermaßen hergestellt:

310,5 g (34,5 Gew.-%) des Reaktivharzes wurden mit 166,5 g (18,5 Gew.-%) Secar® 80 (Kerneos Inc.), 9 g (1 Gew.-%) Cab-O-Sil® TS-720 (Cabot Corporation), 16,2 g (1,8 Gew.-%) Aerosil® R-812 (Evonik) und 397,7 g (44,2 Gew.-%) Quarzsand F32 (Quarzwerke GmbH) im Dissolver unter Vakuum vermischt. Das Mischen erfolgte mit einem PC Laborsystem Dissolver vom Typ LDV 0.3-1 für 8 Minuten (2 min: 2500U/min; dann 6 min: 3500 U/min; jeweils bei einem Druck <100 mbar) mit einer 55 mm Dissolverscheibe und einem Randabstreifer.

### Aus den Reaktivharzkomponenten C5 und C6 wurden nun die Zweikomponenten-Reaktivharz-Svsteme C7 (aus C5) und C8 (aus C6) folgendermaßen hergestellt:

Zur Herstellung der Zweikomponenten-Reaktivharz-Systeme wurden die Reaktivharzkomponenten (Komponente (A)) mit einer Härterkomponente (Komponente (B)) des kommerziell erhältlichen Produkts HIT HY-200 (Hilti Aktiengesellschaft) kombiniert und in Plastikkartuschen (Firma Ritter GmbH; Volumenverhältnis A:B = 5:1) mit den Innendurchmessern 32,5 mm (Komponente (A)) bzw. 14 mm (Komponente (B)) gefüllt.

### D) Bestimmung der Verbundspannung

Um die Auswirkungen des Isosorbiddiglycidylmethacrylat-Bausteins im Vergleich zu der Referenz zu untersuchen, wurden die Verbundspannungen der Zweikomponenten-Reaktivharz-Systeme bestimmt. Zur Bestimmung der Verbundspannungen (Lastwerte) der ausgehärteten Befestigungsmassen wurden Ankergewindestanden M12 in Bohrlöcher in Beton C20/25 mit einem Durchmesser von 14 mm und einer Bohrlochtiefe von 72 mm, die mit den Reaktivharzkomponenten-Zusammensetzungen gefüllt wurden, eingeführt. Die Verbundspannungen wurden durch zentrisches Ausziehen der Ankergewindestanden ermittelt. Es wurden jeweils fünf Ankergewindestangen gesetzt und nach 24 Stunden Lagerung die Verbundspannung bestimmt. Die Befestigungsmassen wurden über einen Statikmischer (Mischer HIT-RE-M; Hilti Aktiengesellschaft) aus den Kartuschen ausgepresst und in die Bohrlöcher injiziert. Zur Ermittlung der Verbundspannung wurden folgende Bohrlochbedingungen eingestellt: das Bohrloch wurde in trockenem Beton hammergebohrt und durch Reinigung staubfrei gemacht. Das Setzen und Aushärten des Mörtels erfolgte bei Raumtemperatur. Das Lagern und Ausziehen erfolgte entweder bei Raumtemperatur oder bei 80 °C. Tabelle 3 zeigt die Ergebnisse dieser Messungen. Bei den gezeigten Verbundspannungen handelt es sich um Mittelwerte aus fünf Messungen.

**Tabelle 3: Verbundspannungen der Reaktivharz-Systeme**

| Reaktivharz-System | Verbundspannung (20 °C) [N/mm²] | Verbundspannung (80 °C) [N/mm²] |
|---|---|---|
| C7 | 31,4 | 22,2 |
| C8 | 27,5 | 17,8 |

Auch wenn die Verbundspannungen des erfindungsgemäßen Reaktivharz-Systems C8 bei beiden Messtemperaturen niedriger als bei der Referenz C7 liegen, sind diese Lastwerte jedoch in einer mit aktuellen Marktprodukten (z.B. HILTI HIT HY-100) vergleichbaren Größenordnung, was die Verwendbarkeit des Isosorbid-Bausteins belegt.

### KURZE BESCHREIBUNG DER FIGUREN

- Figur 1: zeigt eine schematische Darstellung der Auswertung von Temperatur-Zeit-Kurven
- Figur 2: zeigt die in Beispiel B gemessenen Temperatur-Zeit-Kurven

## Patentansprüche

1. Reaktivharz, umfassend mindestens eine Dianhydrohexitol-Verbindung der Formel (I), 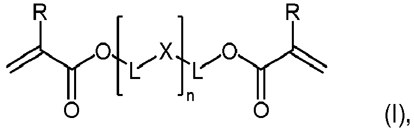 worin R für ein Wasserstoffatom oder eine Methylgruppe steht, X für ein Dianhydrohexitol steht, L unabhängig voneinander für eine verbrückende C₁-C₈-Alkylengruppe stehen, welche unsubstituiert oder Hydroxy-substituiert sein kann, und n 1 bis 5 sein kann.

2. Reaktivharz nach Anspruch 1 oder 2, wobei X für Isosorbid, Isomannid oder Isoidid steht

3. Reaktivharz nach Anspruch 1 oder 2, wobei X für Isosorbid steht.

4. Reaktivharz nach einem der vorhergehenden Ansprüche, wobei die mindestens eine Dianhydrohexitol-Verbindung eine Isosorbid-Verbindung der Formel (Ib) ist, 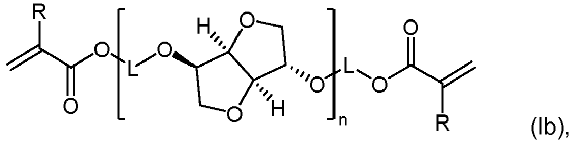 worin R für ein Wasserstoffatom oder eine Methylgruppe steht und L unabhängig voneinander für eine verbrückende C₁-C₈-Alkylgruppe stehen, welche unsubstituiert oder Hydroxy-substituiert sein kann, und n 1 bis 5 sein kann.

5. Reaktivharz nach einem der vorhergehenden Ansprüche, wobei L unabhängig voneinander für eine verbrückende C₃-C₅-Alkylgruppe stehen, welche Hydroxy-substituiert ist.

6. Reaktivharz nach einem der vorhergehenden Ansprüche, wobei L für 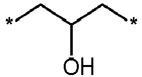 steht.

7. Reaktivharz nach einem der vorhergehenden Ansprüche, enthaltend bis zu 70 Gew.-% der mindestens einen Dianhydrohexitol-Verbindung der Formel (I), bezogen auf das Gesamtgewicht des Reaktivharzes.

8. Verwendung eines Reaktivharzes nach einem der Ansprüche 1 bis 7 zur chemischen Befestigung eines Verankerungsmittels in einem Bohrloch.

9. Reaktivharzkomponente, enthaltend ein Reaktivharz nach einem der Ansprüche 1 bis 7 und anorganische und/oder organische Zuschlagstoffe.

10. Reaktivharzkomponente nach Anspruch 9, wobei der anorganische Zuschlagstoff aus der Gruppe bestehend aus Quarz, Glas, Korund, Porzellan, Steingut, Leichtspat, Schwerspat, Gips, Talk, Kreide oder Gemischen davon ausgewählt ist, und wobei der Zuschlagstoff in Form von Sand, Mehl, oder Formkörpern vorliegen kann.

11. Reaktivharzkomponente nach Anspruch 9 oder 10, wobei das Reaktivharz in einer Menge von 10 bis 60 Gew.-% enthalten ist, bezogen auf das Gesamtgewicht der Reaktivharzkomponente.

12. Zweikomponenten-System, umfassend eine Reaktivharzkomponente nach einem der Ansprüche 9 bis 11 und eine Härterkomponente.

13. Zweikomponenten-System nach Anspruch 12, wobei die Härterkomponente einen Radikalinitiator als Härtungsmittel und gegebenenfalls anorganische und/oder organische Zuschlagstoffe enthält.

14. Verwendung eines Zweikomponenten-Systems nach einem der Ansprüche 12 bis 13 zur chemischen Befestigung eines Verankerungsmittels in einem Bohrloch.

15. Verwendung nach Anspruch 8 oder 14, wobei das Verankerungsmittel aus Stahl oder Eisen ist.

16. Verwendung nach Anspruch 8, 14 oder 15, wobei das Bohrloch ein Bohrloch in mineralischem oder metallischem Untergrund ist, bevorzugt einem Untergrund ausgewählt aus der Gruppe bestehend aus Beton, Porenbeton, Ziegelwerk, Kalksandstein, Sandstein, Naturstein, Glas und Stahl.
